# EUROPÄISCHE PATENTSCHRIFT

(11) **EP 1 491 874 B1**
(45) Veröffentlichungstag und Bekanntmachung des Hinweises auf die Patenterteilung: **24.01.2007**
(21) Anmeldenummer: 04013310.0
(22) Anmeldetag: 05.06.2004
(51) Int. Cl.: G01M 17/007

(54) **Fahrzeugprüfstand**
Vehicle testing stand
Banc d'essai de véhicule

(30) Priorität: 25.06.2003 DE 10328461
(43) Veröffentlichungstag der Anmeldung: 29.12.2004
(73) Patentinhaber: Dürr Assembly Products GmbH, 66346 Püttlingen (DE)
(72) Erfinder: Gehring, Ottmar, Dr., 71394 Kernen (DE); Heilmann, Harro, Dr., 73760 Ostfildern (DE); Schenk, Jan, 41334 Nettetal (DE); Schwarzhaupt, Andreas, Dr., 74420 Oberrot (DE); Spiegelberg, Gernot, Dr., 71296 Heimsheim (DE); Stahl, Wolfgang, 72644 Oberboihingen (DE); Sulzmann, Armin, Dr., 68723 Oftersheim (DE); Tendrup, Thomas, Dr., 66663 Merzig (DE)
(74) Vertreter: Hoeger, Stellrecht & Partner Patentanwälte

(56) Entgegenhaltungen:
- DE-A- 2 139 229
- DE-A- 3 812 824
- GB-A- 389 050
- US-A- 5 231 870
- US-A1- 2002 040 600

## Beschreibung

Die Erfindung betrifft einen Fahrzeugprüfstand mit ausgewählten Merkmalen des Anspruchs 1.

Aus der EP 0 338 373 A2 ist ein Prüfstand zum Testen des Antriebsstranges eines Fahrzeuges bekannt. Dort sind zwei voneinander unabhängige momentengeregelte elektrische Belastungsmaschinen direkt an Wellen des zu prüfenden Antriebsstranges angeflanscht. Dabei werden keine Rollen eingesetzt, auf denen Räder des Fahrzeugs abrollen. Über einen Simulationsrechner erfolgt eine Simulation der Fahrwiderstände, der Räder und des Fahrzeug-Beschleunigungsverhaltens ausschließlich der real als Fahrzeugkomponenten vorhandenen Teile.

Aus der DE 2 139 229 A1 ist ein insbesondere leicht transportables Gerät zum Antreiben eines Fahrzeugrades bekannt, welches über Radmuttern an einer Felge eines Fahrzeugrades befestigbar ist. Mittels dieses Gerätes kann das verbundene Fahrzeugrad angetrieben werden, um beispielsweise zu prüfen, ob ein Radsensor die richtige, der Radgeschwindigkeit entsprechende Spannung liefert.

Aufgabe der Erfindung ist es demgegenüber, einen Fahrzeugprüfstand zur Verfügung zu stellen, mit dem ohne großen baulichen Aufwand die Komponenten im Antriebstrang eines Kraftfahrzeugs überprüft werden können.

Diese Aufgabe wird durch einen Fahrzeugprüfstand nach Anspruch 1 gelöst.

Grundlegender Gedanke der Erfindung ist, ein zu untersuchendes Fahrzeug in Vorbereitung auf die Untersuchung mit einer Achse an einer rahmenförmigen Vorrichtung zu befestigen und eine Belastungsmaschine direkt oder indirekt mit einer Felge eines Kraftfahrzeugrades kraftschlüssig zu verbinden. Dabei ist lediglich die Verbindung zwischen der Vorrichtung und der Achse sowie der Belastungsmaschine und der Radfelge herzustellen, eine Demontage der Räder und eine Montage, beispielsweise einer Verbindungswelle, zum Anschluss an den vorhandenen Antriebstrang des zu untersuchenden Fahrzeugs ist hingegen nicht nötig. Dadurch ist die Rüstzeit zur Versuchsvorbereitung gering.

Als Belastungsmaschinen können elektrische aber auch hydraulische drehzahl- und/oder momentengesteuerte Motoren eingesetzt werden, so z. B. Asynchronmotoren.

Eine Ausführungsform der Erfindung sieht vor, zwischen der Belastungsmaschine und der Radfelge ein Getriebe anzuordnen. Dadurch können einheitliche Belastungsmaschinen verwendet werden, beispielsweise für zu testende Personenwagen und Nutzfahrzeuge, deren Räder mit unterschiedlichen Geschwindigkeiten betrieben werden. Als Getriebe können beispielsweise Zahnradgetriebe oder auch Über- oder Untersetzungen durch Riementriebe mit unterschiedlichen Riemenscheiben vorgesehen werden.

In einer weiteren Ausführungsform ist zwischen einer Belastungsmaschine und einem lenkbaren Kraftfahrzeugrand eine Wellenkupplung angeordnet. Dadurch wird gewährleistet, dass auch auf dem Prüfstand die Lenkung des zu untersuchenden Fahrzeugs eingesetzt werden kann. Dies ist beispielsweise wichtig, wenn der Energieverbrauch, der aufgrund einer Lenkunterstützung durch eine Servolenkung entsteht, bei einem Test auf dem Prüfstand realistisch abgebildet werden soll.

Eine Wellenkupplung kann beispielsweise durch Kardangelenke, durch Tripoden- oder homokinetische Gelenke oder auch durch reibschlüssige Gummischeiben verwirklicht werden.

Weitere Vorteile sind den weiteren Unteransprüchen, sowie dem nachfolgend anhand von Zeichnungen näher erläuterten Ausführungsbeispiel eines erfindungsgemäßen Fahrzeugprüfstands und den zwei auf dem Prüfstand durchführbaren Testabläufen zu entnehmen.

In den Zeichnungen zeigen:
- Fig. 1:: eine schematische Draufsicht auf einen Fahrzeugprüfstand mit abstrahierten Komponenten eines Kraftfahrzeugs,
- Fig. 2:: eine Draufsicht auf eine Rahmenkonstruktion des Prüfstands,
- Fig. 3:: ein Ablaufdiagramm bei einer Funktionsüberprüfung eines Anti-Blockier-Systems (ABS),
- Fig. 4:: ein Ablaufdiagramm bei einer Funktionsüberprüfung einer Anti-Schlupf-Regelung (ASR).

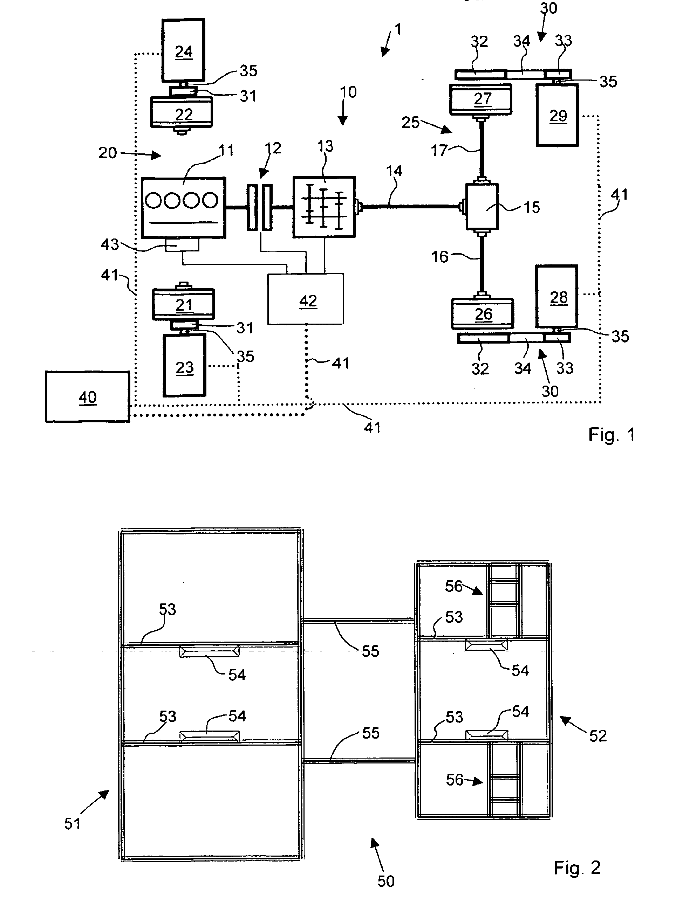

In Fig. 1 ist ein erfindungsgemäßer Fahrzeugprüfstand 1 schematisch dargestellt. Ein Fahrzeug 10 ist dabei abstrahiert wiedergegeben. Das Fahrzeug 10 weist einen Verbrennungsmotor 11 auf, welcher über eine Kupplung 12 mit dem Eingang eines Schaltgetriebes 13 verbunden ist. Der Ausgang des Schaltgetriebes 13 steht über eine Antriebswelle 14 mit einem Hinterachsdifferential 15 in Verbindung, von dem seitliche Gelenkwellen 16,17 abgehen, die Räder 26,27 einer angetriebenen Hinterachse 25 des Fahrzeugs 10 antreiben.

An der Vorderachse 20 weist das Fahrzeug 10 zwei lenkbare Fahrzeugräder 21,22 auf. Diese können im Falle eines Allradantriebs über seitliche Gelenkwellen mit einem Vorderachsdifferential und dieses mit dem Schaltgetriebe 13 antriebsverbunden sein.

Alle vier Fahrzeugräder 21,22,26,27 sind mit ' Belastungsmaschinen 23,24,28,29 verbunden. Die Belastungsmaschinen 23,24,28,29 an den Rädern 21,22 der Vorderachse 20 sind direkt mit den Radfelgen der Räder 21,22 über beispielweise Radbolzen verschraubt. Um die Lenkbarkeit der vorderen Räder 21,22 zu gewährleisten, ist zwischen der Ausgangswelle 35 einer Belastungsmaschine 23,24 und der Radfelge eine Wellenkupplung 31 angeordnet.

Die Belastungsmaschinen 28,29 an der Hinterachse 25 sind über ein Getriebe 30 in Form eines Riemengetriebes mit den Rädern 26,27 der Hinterachse 25 verbunden. Dazu ist eine Riemenscheibe 32 mit der Radfelge eines Rades 26,27 beispielsweise mittels Radbolzen verschraubt. Eine im Durchmesser kleinere Riemenscheibe 33 ist mit der Ausgangswelle 35 einer Belastungsmaschine 28,29 verbunden. Der Riementrieb 34 ist zwischen den unterschiedlich großen Riemenscheiben 32,33 gespannt.

Die Belastungsmaschinen 23,24,28,29 sind über Signalleitungen 41 mit einer Auswerte- und Steuereinheit 40 verbunden. Des weiteren besteht eine lösbare Verbindung über eine weitere Signalleitung 41 zwischen der Auswerte- und Steuereinheit 40 sowie einer Antriebstrangsteuerung 42 des Fahrzeugs 10. Die Antriebstrangsteuerung 42 ist mit einer Motorsteuerung 43 verbunden, die beispielsweise die Einspritzung des Kraftstoffes, den Zündzeitpunkt und/oder eine eventuell vorhandene Drosselklappe steuert. Ebenso ist die Antriebstrangsteuerung 42 mit der Kupplung 12 und dem schaltbaren Getriebe 13 verbunden, wodurch die Kraftübertragung vom Verbrennungsmotor 11 zu den angetriebenen Rädern 26,27 steuerbar ist.

In der Auswerte- und Steuereinheit 40 können verschiedene Programme ablaufen, mit denen verschiedene Komponenten oder Systemeinheiten des Fahrzeugs 10 auf dem Prüfstand 1 überprüft werden können. Eine solche Testeinrichtung wird auch Hardware-in-the-loop genannt.

In Fig. 2 ist eine Rahmenkonstruktion 50 des Prüfstandes 1 dargestellt. Im Bereich der Vorder- und Hinterachse 20,25 sind rechteckige Rahmenaufbauten 51,52 vorgesehen. Dabei weisen die Träger vorteilhafter weise ein Doppel-T-Flaschträger-Profil bzw. I-Profil auf. Der Rahmenaufbau 51,52 wird jeweils von zwei Längsstreben 53 durchquert. An diesen Längsstreben 53 sind Haltevorrichtungen 54 vorgesehen, über die das Fahrzeug 10 mit dem Prüfstand 1 verbunden wird. Dabei handelt es sich um Stützen, auf denen die Achsen des zu untersuchenden Fahrzeugs 10 beispielsweise über Federbriden angebunden werden. Die Stützen sind längs- und querverschieblich mit den Längsstreben 53 verbunden, um eine Anpassung des Prüfstands 1 an verschiedene Fahrzeugtypen mit unterschiedlichen Radständen und Spurweiten zu gewährleisten. Gegebenenfalls können die Stützen etwas in der Länge variiert werden, um das Fahrzeug 10 und insbesondere die Fahrzeugräder 21,22,26,27 von der Aufstandfläche anzuheben, so dass sie frei bewegt werden können.

Die beiden der Vorder- und Hinterachse 20,25 zugeordneten Rahmenaufbauten 51,52 sind über zwei Mittenlängsträger 55 miteinander verbunden. An dem der Hinterachse 25 zugeordneten Rahmenaufbau 52 sind beispielhaft die die Belastungsmaschinen 28,29 tragenden Trägerrahmen 56 dargestellt.

In der Auswerte- und Steuereinheit 40 können verschiedene Testprogramme ablaufen, von denen exemplarisch nachfolgend zwei Programmabläufe skizziert werden.

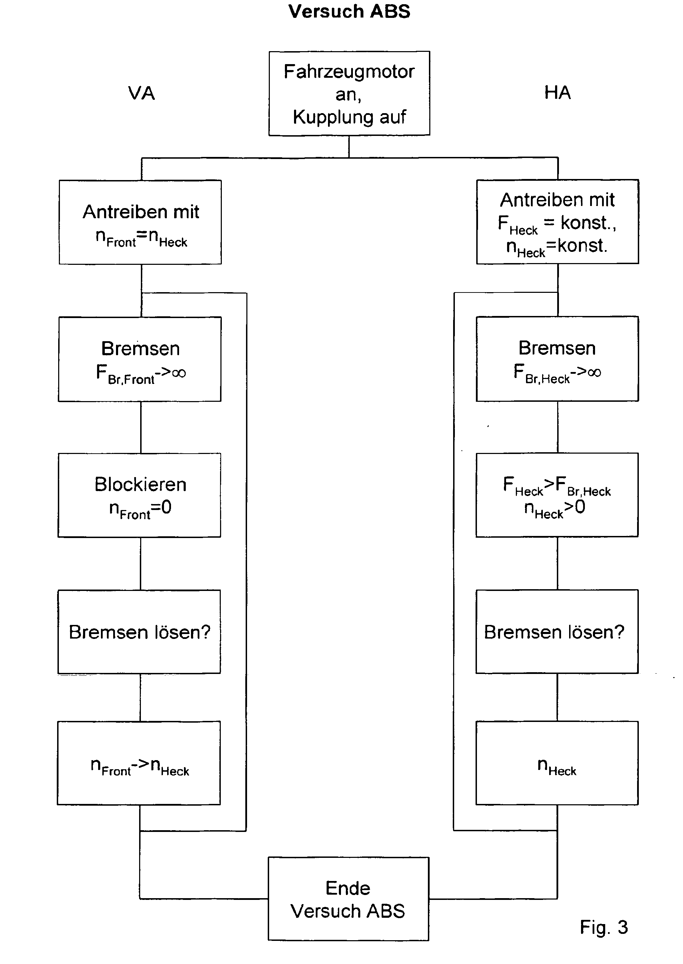

In Fig. 3 ist der Programmablauf eines ABS-Versuchs an einem Nutzfahrzeug dargestellt. Dabei sind auf der linken Seite die Vorgänge an der in diesem Beispiel nicht angetriebenen Vorderachse 20 und auf der rechten Seite die Vorgänge an der angetriebenen Hinterachse 25 dargestellt.

Der Versuch startet durch Anlassen des Verbrennungsmotors 11 des Nutzfahrzeugs, um die Betriebsbereitschaft der in der Regel pneumatisch betriebenen Fahrzeugbremsen herzustellen. Die Kupplung 12 bleibt geöffnet, damit der Antriebstrang im Leerlauf betrieben werden kann. Über die der Hinterachse 25 zugeordneten Belastungsmaschinen 28,29 werden die Hinterräder 26,27 mit einer konstanten Antriebskraft F_{Heck} beaufschlagt. Diese steht im Gleichgewicht zu einer Kraft, die durch Reibung im Antriebstrang zwischen Getriebe 13 und Hinterrädern 26,27 hervorgerufen wird. Somit stellt sich eine konstante Raddrehzahl n_{Heck} an den Rädern 26,27 der Hinterachse 25 ein. Diese Raddrehzahl ermittelt die Auswerte- und Steuerungseinheit 40 aufgrund der Drehzahlen der der Hinterachse 25 zugeordneten Belastungsmaschinen 28,29. Über die der Vorderachse 20 zugeordneten Belastungsmaschinen 23,24 werden die Räder 21,22 angetrieben, so dass an der Vorderachse 20 die gleiche Raddrehzahlen anliegen, wie an der Hinterachse 25. Es wird somit eine Geradeausfahrt bei konstanter Fahrgeschwindigkeit des zu untersuchenden Fahrzeugs 10 simuliert.

Durch Betätigen der Fahrzeugbremse wird an den Fahrzeugrädern 21,22,26,27 ein stetig zunehmendes Bremsmoment aufgebracht. Dies kann über eine Betätigung des Bremspedals oder durch Ansteuern der mit der Bremssteuerung verbundenen Antriebstrangsteuerung 42 erfolgen. Solange das Antriebsmoment der Belastungsmaschinen 28,29 an der Hinterachse 25 größer ist, als das durch die Fahrzeugbremse hervorgerufene Bremsmoment, drehen sich die Hinterräder 26,27. Die von den Fahrzeugbremsen hervorgerufene Bremskraft und/oder das Bremsmoment an den Hinterrädern 26,27 wird über die Belastungsmaschinen 28,29 von der Auswerte- und Steuereinheit 40 ermittelt. Über ein in der Auswerte- und Steuereinheit 40 hinterlegtes, fahrzeugspezifisches Kennfeld wird die Abnahme der Fahrzeuggeschwindigkeit ermittelt. Entsprechend steuern die Belastungsmaschinen 23,24 die Räder 21,22 der Vorderachse 20 an, so dass die Drehzahlen der Vorderräder 21,22 entsprechend abnehmen. Zusätzlich wirken auf die Vorderräder 21,22 ebenfalls die Fahrzeugbremsen.

Sobald ein oder mehrere Fahrzeugräder 21,22,26,27 blockieren, also die Drehzahl n=0 aufweisen und das Fahrzeug 10 gemäß des in der Auswerte- und Steuereinheit ablaufenden Modells noch nicht komplett zum Stillstand gekommen ist, greift das Antiblockiersystem (ABS) des Fahrzeugs 10 ein und öffnet jeweils radselektiv an dem Rad 21,22,26,27, welches die Drehzahl n=0 aufweist, die zugeordnete Bremse, so dass dieses Fahrzeugrad 21,22,26,27 wieder auf die vom Modell vorgegebene Drehzahl beschleunigt werden kann, bevor die Bremse das Rad 21,22,26,27 weiter abbremst und eventuell erneut blockiert.

Für den Fall, dass in dem eben beschriebenen Beispiel die Radbremse nicht wieder geöffnet wird, liegt ein Fehler im ABS vor. Dieses wird von der Auswerte- und Steuereinheit 40 registriert und ausgegeben bzw. weiterverarbeitet.

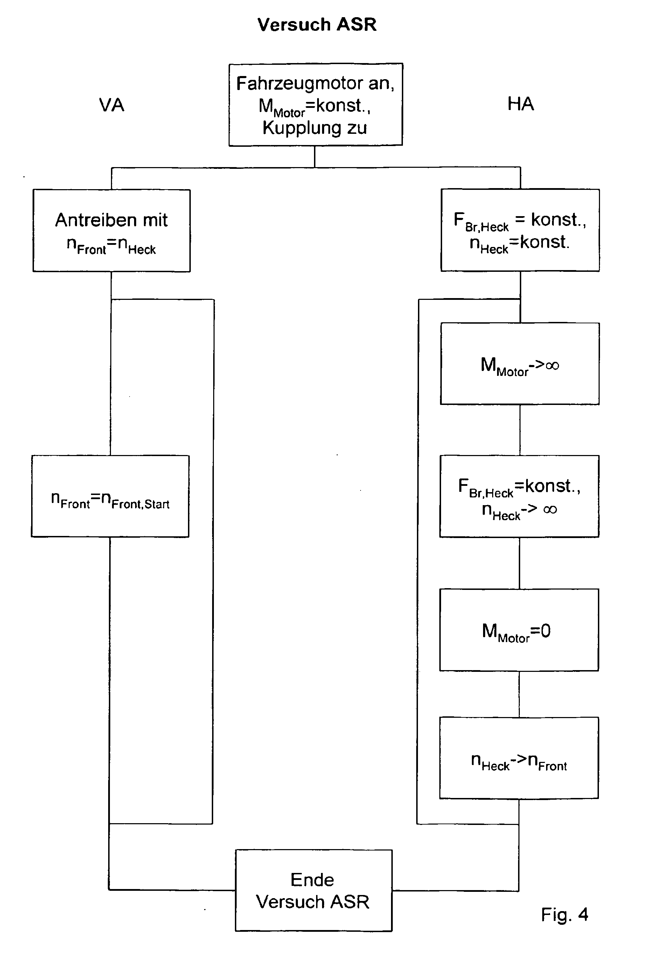

Einen Versuchsablauf zur Überprüfung der Funktionsfähigkeit einer Anti-Schlupf-Regelung (ASR) zeigt Fig. 4. Auch hier sind auf der linken Seite die Vorgänge an der Vorderachse 20 und auf der rechten Seite die Vorgänge an der Hinterachse 25 dargestellt.

Nach Start des Verbrennungsmotors 11 wird die Kupplung 12 geschlossen, so dass bei konstantem Motormoment und konstanter Bremskraft an der angetrieben Hinterachse 25 eine konstante Raddrehzahl an den Rädern 26,27 der Hinterachse 25 vorliegt. Die konstante Bremskraft an den Hinterräder 26,27 wird durch die Belastungsmaschinen 28,29 der Hinterachse 25 hervorgerufen.

Über die Drehzahl der Belastungsmaschinen 28,29 ermittelt die Auswerte- und Steuereinheit 40 die Raddrehzahl an der Hinterachse 25 und steuert entsprechend die Belastungsmaschinen 23,24 an den Rädern 21,22 der Vorderachse 20, so dass ebenfalls wieder eine Geradeausfahrt des Fahrzeugs 10 bei konstanter Geschwindigkeit simuliert wird.

Nun wird durch Ansteuerung der Antriebstrangsteuerung 42 das Motormoment des Verbrennungsmotors 11 annähernd sprunghaft erhöht, so dass die Raddrehzahl an der Antriebsachse 25 entsprechend zunehmen, da die von den Belastungsmaschinen 28,29 erzeugte Bremskraft an der Hinterachse 25 konstant geblieben ist. An der Vorderachse 20 werden die Räder 21,22 weiterhin mit der nach Start vorliegenden Drehzahl von den Belastungsmaschinen 23,24 angetrieben, so dass nun ein Drehzahlunterschied zwischen angetriebener Achse 25 und nicht angetriebener Achse 20 vorliegt. Dieser Drehzahlunterschied wird von der Anti-Schlupf-Regelung (ASR) erkannt. Daraufhin greift das ASR in die Motorsteuerung 43 ein und unterdrückt beispielsweise die Kraftstoffeinspritzung, verstellt den Zündwinkel, schließt die Drosselklappe und/oder im Falle eines vorhandenen elektronischen Stabilitäts-Programms (ESP) schließt kurzzeitig die dem "durchdrehenden" Rad 26,27, also welches mit einem starken Drehzahlanstieg beaufschlagt wird, zugeordnete Bremse, so dass das Antriebsmoment am Rad 26,27 kurzzeitig auf Null reduziert wird. Durch die Belastungsmaschinen 28,29 an der Hinterachse 25 werden die Hinterräder 26,27 sodann wieder der Raddrehzahl der Vorderräder 21,22 angepasst.

Sollte das Motormoment bei sprunghafter Motormoment- und Hinterraddrehzahlzunahme nicht vom ASR reduziert werden, liegt ein Fehler in der ASR vor, was durch die Antriebs- und Steuereinheit 40 festgestellt und ausgegeben bzw. anderweitig verarbeitet wird.

Es ist leicht nachvollziehbar, dass die Fahrzeugräder 21,22,26,27 der beiden Fahrzeugseiten durch die Belastungsmaschinen 23,24,28,29 getrennt von einander unterschiedlich angetrieben oder gebremst werden können. Dadurch können die oben beschriebenen Versuche auch radselektiv durchgeführt werden, also kann beispielsweise beim ABS-Test nur ein Rad 21,22,26,27 blockieren oder im Falle des ASR-Test nur ein Rad 21,22,26,27 durchdrehen.

Mit dem erfindungsgemäßen Prüfstand 1 können auch noch weitere Hardware-in-the-loop-Versuche durchgeführt werden, so z.B. Versuche, um die Reibung im Antriebstrang zu ermitteln. Dazu werden im Leerlauf des Fahrzeugs 10 die Fahrzeugräder 21,22,26,27 mit einer bestimmten Kraft von den Belastungsmotoren 23,24,28,29 beschleunigt. Der Raddrehzahlverlauf über der Zeit lässt Rückschlüsse auf die Reibung im Antriebstrang zu. Durch Vergleich der Versuche bei ab- bzw. zugeschalteten Komponenten kann die Reibung dieser Komponenten ermittelt werden.

## Patentansprüche

1. Fahrzeugprüfstand (1) mit
- einer rahmenförmigen Vorrichtung (50), an der eine Achse (20; 25) des zu untersuchenden Kraftfahrzeugs in Vorbereitung auf die Untersuchung befestigbar ist,
- mehreren Belastungsmaschinen (23, 24, 28, 29), die mit dem Antriebstrang des Kraftfahrzeugs koppelbar sind, wobei die Belastungsmaschinen (23, 24, 28, 29) den Antriebstrang sowohl antreiben als auch bremsen können, und
- einer kraftschlüssigen, direkten oder indirekten Verbindung zwischen jeder Belastungsmaschine (23, 24, 28, 29) und jeweils einer Felge eines Kraftfahrzeugrades (21, 22, 26, 27),
wobei alle Belastungsmaschinen (23, 24, 28, 29) über Steuerleitungen (41) mit einer Auswerte- und Steuereinheit (40) verbunden sind und die Auswerte- und Steuereinheit (40) mit einer fahrzeugseitigen Antriebstrangsteuerung (42) verbindbar ist.

2. Fahrzeugprüfstand nach Anspruch 1,
**dadurch gekennzeichnet,**
**dass** zwischen einer der Belastungsmaschinen (28, 29) und der jeweiligen Radfelge ein Getriebe (30) angeordnet ist.

3. Fahrzeugprüfstand nach Anspruch 1 oder 2,
**dadurch gekennzeichnet,**
**dass** zwischen einer der Belastungsmaschinen (23, 24) und einem lenkbaren Kraftfahrzeugrad (21, 22) eine Wellenkupplung (31) angeordnet ist.

4. Fahrzeugprüfstand nach einem der Ansprüche 1 bis 3,
**dadurch gekennzeichnet,**
**dass** jedem Rad des Kraftfahrzeugs eine Belastungsmaschine (23, 24, 28, 29) zugeordnet ist, wobei über die Belastungsmaschinen (23, 24, 28, 29) die Raddrehzahl und/oder das Drehmoment des jeweiligen Kraftfahrzeugrads (21, 22, 26, 27) sensierbar ist.

5. Fahrzeugprüfstand nach einem der Ansprüche 1 bis 4,
**dadurch gekennzeichnet,**
**dass**
der Fahrzeugprüfstand zum Testen von Komponenten im Antriebstrang eines Kraftfahrzeugs geeignet ist, wobei
- die Belastungsmaschinen (23, 24, 28, 29) und/oder die Antriebstrangsteuerung (42) des Kraftfahrzeugs (10) von der Auswerte- und Steuereinrichtung (40) mit einem Testprogramm derart ansteuerbar sind, dass eine Änderung einer Zustandsgröße im Antriebstrang bewirkt wird und
- die Auswerte- und Steuereinrichtung (40) beim Ablaufen des Testprogramms die Änderung der Zustandsgröße mit einer im Testprogramm hinterlegten Soll-Änderung vergleicht und ein Testergebnis ausgibt.

## Claims

1. Vehicle test bench (1) with
• a frame-like device (50), to which an axle (20; 25) of the motor vehicle to be tested can be fastened in preparation for the test,
• a plurality of loading machines (23, 24, 28, 29), which can be coupled to the drive train of the motor vehicle, wherein the loading machines (23, 24, 28, 29) can both drive and brake the drive train, and
• a force transmitting, direct or indirect connection between each loading machine (23, 24, 28, 29) and a respective rim of a motor vehicle wheel (21, 22, 26, 27),
wherein all the loading machines (23, 24, 28, 29) are connected to an evaluation and control unit (40) by means of control lines (41) and the evaluation and control unit (40) can be connected to a drive train control system (42) on the vehicle side.

2. Vehicle test bench according to Claim 1, **characterised in that** a gear (30) is arranged between one of the loading machines (28, 29) and the respective wheel rim.

3. Vehicle test bench according to Claim 1 or 2, **characterised in that** a shaft coupling (31) is arranged between one of the loading machines (23, 24) and a steerable vehicle wheel (21, 22).

4. Vehicle test bench according to one of Claims 1 to 3, **characterised in that** a loading machine (23, 24, 28, 29) is associated with each wheel of the motor vehicle, wherein the wheel speed and/or the torque of the respective motor vehicle wheel (21, 22, 26, 27) can be detected by means of the loading machines (23, 24, 28, 29).

5. Vehicle test bench according to one of Claims 1 to 4, **characterised in that** the vehicle test bench is suitable for testing components in the drive train of a motor vehicle, wherein
• the loading machines (23, 24, 28, 29) and/or the drive train control system (42) of the motor vehicle (10) can be controlled by a test program by the evaluation and control unit (40) in such a manner that a change in a state variable is effected in the drive train, and
• during the course of the test program the evaluation and control unit (40) compares the change in the state variable with a desired change filed in the test program and outputs a test result.

## Revendications

1. Banc d'essai pour véhicule (1) avec
- un dispositif ayant la forme d'un cadre (50), sur lequel on peut fixer un essieu (20; 25) du véhicule à contrôler, en vue de la préparation du contrôle,
- plusieurs machines de sollicitation (23, 24, 28, 29), que l'on peut accoupler sur la chaîne cinématique du véhicule automobile, les machines de sollicitation (23, 24, 28, 29) étant aptes aussi bien à l'entraînement qu'au freinage de la chaîne cinématique, et
- une liaison directe ou indirecte par complémentarité de force entre chaque machine de sollicitation (23, 24, 28, 29) et chaque fois une jante d'une roue de véhicule (21, 22, 26, 27),
toutes les machines de sollicitation (23, 24, 28, 29) étant reliées par l'intermédiaire de lignes pilotes (41) avec une unité d'évaluation et de commande (40) et l'unité d'évaluation et de commande (40) pouvant être reliée avec une commande de la chaîne cinématique (42) côté véhicule.

2. Banc d'essai pour véhicule selon la revendication 1, **caractérisé en ce qu'**un engrenage (30) est placé entre l'une des machines de sollicitation (28, 29) et la jante de roue concernée.

3. Banc d'essai pour véhicule selon la revendication 1 ou 2, **caractérisé en ce qu'**un accouplement d'arbre (31) est placé entre l'une des machines de sollicitation (23, 24) et l'une des roues dirigeables du véhicule (21, 22).

4. Banc d'essai pour véhicule selon l'une quelconque des revendications 1 à 3, **caractérisé en ce qu'**à chaque roue du véhicule automobile est associée une machine de sollicitation (23, 24, 28, 29), la vitesse de rotation des roues et/ou le couple de rotation de la roue de véhicule concernée (21, 22, 26, 27) pouvant être captés par l'intermédiaire de la machine de sollicitation (23, 24, 28, 29).

5. Banc d'essai pour véhicule selon l'une quelconque des revendications 1 à 4, **caractérisé en ce que**,
le banc d'essai pour véhicule est adapté pour tester des composants de la chaîne cinématique d'un véhicule automobile,
- les machines de sollicitation (23, 24, 28, 29) et/ou la commande de la chaîne cinématique (42) du véhicule automobile (10) pouvant être actionnée(s) à l'aide d'un programme de test, par le dispositif d'évaluation et de commande (40) de façon à provoquer une modification de la dimension d'état dans la chaîne cinématique et
- lors du déroulement du programme de test, le dispositif d'évaluation et de commande (40) comparant la modification de la dimension d'état avec une modification de consigne sauvegardée dans le programme de test et éditant un résultat de test.
